# EUROPEAN PATENT SPECIFICATION

(11) **EP 4 200 192 B1**
(45) Date of publication and mention of the grant of the patent: **15.01.2025**
(21) Application number: 22744639.0
(22) Date of filing: 17.05.2022
(51) Int. Cl.: B62D 1/18, B62D 1/04, B60N 2/75

(54) **MINI STEERING MECHANISM INTEGRATED INTO SEAT**
IM SITZ INTEGRIERTER MINI-LENKMECHANISMUS
MINI MÉCANISME DE DIRECTION INTÉGRÉ DANS UN SIÈGE

(30) Priority: 25.06.2021 TR 202110447
(43) Date of publication of application: 28.06.2023
(73) Proprietor: Hidromek-Hidrolik Ve Mekanik Makina Imalat Sanayi Ve Ticaret Anonim Sirketi, Sincan/Ankara (TR)
(72) Inventor: ATAKUL, Furkan, Ankara (TR); TELISIK, Hakan, Ankara (TR); ÇIÇEK, Mehmet, Ankara (TR); YELKEN, Murat, Ankara (TR); BOZKURT, Mustafa, Ankara (TR)
(74) Representative: Kayahan, Senem
(86) International application number: PCT/TR2022/050437
(87) International publication number: WO 2022/271122

(56) References cited:
- CN-U- 204 323 466
- DE-A1- 19 951 379
- FR-A1- 2 801 555
- US-A1- 2006 061 177
- US-A1- 2011 025 108

## Description

### Technical Field

The invention relates to a mini steering mechanism used in construction machines that require direction control with a steering wheel such as graders, rubber wheeled loaders, backhoe loaders, compactors and rubber wheeled excavators.

The feature of the invention is related to a mini steering mechanism that enables the operator to use the joystick (control lever) and the steering wheel alternately and increasing the front field of view area of the operator inside the machine by integrating the steering wheel, which is used in the steering process of the construction machines and restricts the operator's field of view, on the left console of the seat.

### Present State of the Art

In construction machines such as graders, rubber wheeled loaders, backhoe loaders, compactors and rubber wheeled excavators, a steering column and a steering wheel positioned in front of the operator are used for the directional control of the vehicle. In addition, the control of the machine attachments is carried out by means of a joystick (control lever).

In the present state of the art, the steering wheel used in the maneuvers of the vehicle is positioned in the cabin in front of the operator. As a result of this, the front field of view, which is very important for the use of the construction equipment, is adversely affected. In addition, the steering column and steering wheel makes it difficult for the operator to get in and out of the cabin. Furthermore, regarding the use of the steering wheel, while the operator controls the attachment via the joystick (control lever) with one arm, the other arm (usually his left arm) stays in the air, and because the steering wheel is turned constantly, this causes ergonomic problems for the operator during long working hours. For this reason, a need for an improvement in the steering wheel has arisen, which prevents the operator's field of view and causes ergonomic problems during use in the known state of the art.

The document numbered WO 2020 024026 A1 can be shown as an example of the present state of the art in the research conducted in the literature. The said document is related to a steering wheel structure, which is integrated into the vehicle seat and has a folding feature with its articulated structure, in the said invention, the operator's field of view is opened by folding tile steering wheel to the side of the seat by moving it upwards. However, since the said steering wheel cannot be hidden in the cabin, it is positioned in its folded position in a way that constricts the interior space of the cabin. Also, it is not possible to use the steering wheel and tile joystick (control lever) alternately.

The document numbered DE 1995 6870 A1 can be shown as another example of the present state of the art. The said document relates to a steering knob integrated in the operator's seat for manual steering of industrial trucks. In the said invention, steering wheel control is realized manually by means of a knob that can be grasped with the fingers or palm. However, the said steering knob is fixed on the seat and it is not possible to use tile steering knob and the joystick (control lever) alternately.

The document numbered US 2006/061177 A1 can be shown as another example of the present state of the art. The said document relates to seat repositioning systems for such vehicles. The present invention provides a vehicle seat arrangement for a working vehicle comprising an operator's seat having at least one adjustable feature, such as the ability to rotate the seat, adjust the height or seat back tilt, adjust the positioning of the seat fore and aft, and/or adjust the positioning of the seat in a lateral (side to side) direction.

The document numbered US 2011/025108 A1 can be shown as another example of the present state of the art. The said document relates to a driver interface operable by the driver of a utility vehicle. Object of the invention to provide a driver interface which is easily accessible to the driver but does not hinder easy access to other driver interfaces. It is another object of the invention to provide a driver interface that delivers improved safety in operation.

Therefore, the existence of the above problems and the inadequacy of the existing solutions made it necessary to make an improvement in the related technical field.

### Objects of the Invention

The present invention relates to a mini steering mechanism integrated into the seat, which eliminates the disadvantages mentioned above and brings new advantages to the related technical field.

The main object of the invention is to increase the front field of view of the operator in construction machines by integrating the steering wheel, which is used in the steering process of construction machines and restricts the operator's field of vision, on the left console of the seat.

The object of the invention is to enable the operator to use the joystick (control lever) and the steering wheel alternately by integrating the steering wheel on a support body that can rotate on the left console.

Another object of the invention is to increase ergonomics and provide ease of use for the operator, by means of the fact that the steering wheel can be hidden in the left console using the support body that can rotate during the time the operator uses the joystick (control lever).

Another object of the invention is to eliminate the ergonomic problems experienced by the operator during the use of the steering wheel.

Another object of the invention is to facilitate the entry and exit of the operator into and out of the cabin, by eliminating the presence of the steering column and steering wheel at the front of the construction machine cabin.

In order to fulfill all the objects described above that may arise from the detailed description, the invention is a mini steering mechanism used in the seats of the construction machines that require direction control with a steering wheel such as graders, rubber wheeled loaders, backhoe loaders, compactors and rubber wheeled excavators, the said seats being equipped with a right console and left console, the mini steering mechanism comprising a right joystick (control lever) on the right console for controlling the attachments of the construction machine, wherein it comprises;
- a rotating support body in the left console,
- a mini steering wheel provided on the support body, which is positioned on the left console with the rotating movement of the support body, that provides the steering process for the maneuvering of the construction machine,
- a left joystick (control lever) provided on the support body, which is positioned on the left console with the rotating movement of the support body, that provides the control process for the attachments of the construction machine.

The structural and characteristic features of the invention and all its advantages will be understood more clearly by means of the figures provided below and the detailed explanation written with reference to these figures. Therefore the evaluation should be made by taking these figures and detailed explanation into account.

### Figures to Help Understand the Invention

- **Figure 1**: is the representative side view of the mini steering mechanism, which is the subject of the invention, on the seat.
- **Figure 2**: is the representative top view of the mini steering mechanism, which is the subject of the invention, on the seat.

### Description of Part References

- **10.**: Seat
- **20.**: Right console
- **30.**: Left console
- **40.**: Right joystick (control lever)
- **50.**: Support body
- **51.**: Center of rotation
- **60.**: Mini steering wheel
- **70.**: Left joystick (control lever)
- **80.**: Proportional button

### Detailed Description of the Invention

In this detailed description, preferred alternatives of the mini steering mechanism, which is the subject of the invention, are explained only for the purpose of providing a better understanding of the subject and in a manner that does not create any limiting effect.

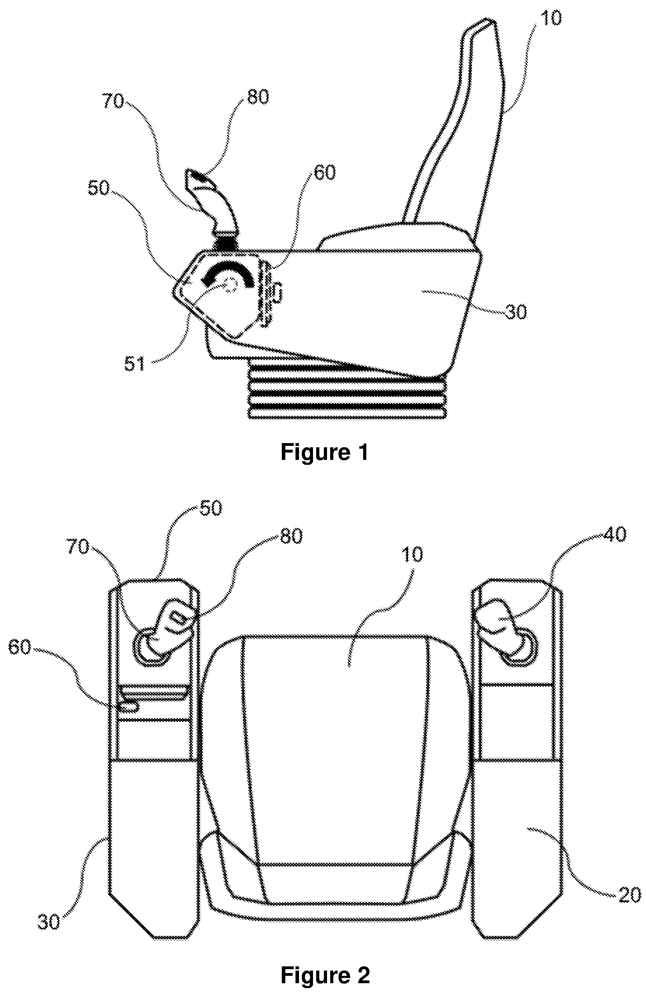

Figures 1 and 2 are the representative views of the mini steering mechanism, which is the subject of the invention, on the seat (10) of the construction machine. According to these figures, the mini steering mechanism, in its most basic form, comprises a right console (20) located on the right side of the seat (10) and a right joystick (control lever) (40), which provides for the control of the attachments of the construction machine on the right console (20); a left console (30) located on the left side of the seat (10), a rotating support body (50) located in the left console (30), a mini steering wheel (60) located on the support body (50) which provides the steering process for the maneuver of the construction machine, a left joystick (control lever) (70) located on the support body (50) which provides for the control process for the attachments of the construction machine and a proportional button (80) located on the left joystick (control arm) (70), which provides steering control for the attachments of the construction machine together with the left joystick (control arm) (70).

As seen in Figure 2, the right console (20) is located on the right side of the construction machine seat (10) and the left console (30) is located on the left side. The right joystick (control lever) (40) that provides for the control of the attachments of the construction machine is located on the right console (20).

A support body (50) is attached into the left console (30). The support body (50) makes a rotational movement on the axis of the rotation center (51) it has. The mini steering wheel (60) and the left joystick (control lever) (70) are located on the support body (50). The said mini steering wheel (60) provides the steering process for the maneuvering of the construction machine. The left joystick (control lever) (70) provides the control of the attachments of the construction machine.

By means of the rotation movement of the support body (50) located in the left console (30) on the axis of the center of rotation (51), the mini steering wheel (60) or the left joystick (control lever) (70) is positioned on the left console (30). Thus, it is ensured that the operator can use the mini steering wheel (60) or the left joystick (control lever) (70) alternately.

On the left joystick (control lever) (70), there is a proportional button (80) that allows the operator to control the attachments of the construction machine and perform steering action for the maneuvering of the construction machine.

*The operation of the mini steering mechanism, which is the subject of the invention, is as follows;*
When the support body (50) in the left console (30) rotates around the center of rotation (51) axis, the mini steering wheel (60) or the left joystick (control lever) (70) is positioned on the left console (30), depending on the operator's requirement for use.
When the left joystick (control lever) (70) is being used, the mini steering wheel (60) is hidden inside the left console (30). When the mini steering wheel (60) is being used, the left joystick (control lever) (70) turns forward and becomes inactive. The operator uses the mini steering wheel (60) or the left joystick (control lever) (70) alternately by rotating the support body (50) on the axis of the rotation center (51), depending on his requirement for use.

The operator can steer the maneuvering of the construction machine and control the attachments of the construction machine by using the proportional button (80) on the left joystick (control lever) (70).

## Claims

1. A mini steering mechanism used in the seats (10) of the construction machines that require direction control with a steering wheel such as graders, rubber wheeled loaders, backhoe loaders, compactors and rubber wheeled excavators, the said seats being equipped with a right console (20) and left console (30), the mini steering mechanism comprising a right joystick (40) (control lever) on the right console (20) for controlling the attachments of the construction machine, **characterized in that** the mini steering mechanism comprises;
- a rotating support body (50) in the left console (30),
- a mini steering wheel (60) located on the support body (50), which provides the steering process for the maneuvering of the construction machine by positioning on the left console (30) by means of the rotating movement of the support body (50),
- a left joystick (70) (control lever) located on the support body (50), which provides the control process for the attachments of the construction machine by positioned on the left console (30) by means of the rotating movement of the support body (50).

2. The mini steering mechanism according to claim 1, **characterized in** comprising the support body (50) in the said left console (30) that rotates around its center of rotation (51) axis and positions the mini steering wheel (60) or the left joystick (70) (control lever) on the left console (30) so as to allow the operator to use the mini steering wheel (60) or the left joystick (70) (control lever) alternately or is hidden inside the left console (30).

3. The mini steering mechanism according to claim 1, **characterized in** comprising a proportional button (80) located on the said left joystick (70) (control lever) that allows the operator to control the attachments of the construction machine and perform steering action for the maneuvering of the construction machine.

## Patentansprüche

1. Ein Mini-Lenkmechanismus, der in den Sitzen (10) von Baumaschinen verwendet wird, die eine Richtungssteuerung mit einem Lenkrad erfordern, wie beispielsweise Grader, Gummiradlader, Baggerlader, Verdichter und Gummiradbagger, wobei die Sitze mit einer rechten Konsole (20) und einer linken Konsole (30) ausgestattet sind und der Mini-Lenkmechanismus einen rechten Joystick (40) (Steuerhebel) auf der rechten Konsole (20) zum Steuern der Anbaugeräte der Baumaschine umfasst, **dadurch gekennzeichnet, dass** der Mini-Lenkmechanismus umfasst:
- einen rotierenden Stützkörper (50) in der linken Konsole (30),
- ein auf dem Stützkörper (50) angeordnetes Mini-Lenkrad (60), das den Lenkvorgang für das Manövrieren der Baumaschine durch Positionieren auf der linken Konsole (30) mittels der Drehbewegung des Stützkörpers (50) bereitstellt,
- einen am Stützkörper (50) angeordneten linken Joystick (70) (Steuerhebel), der durch die Drehbewegung des Stützkörpers (50) die Steuerung für die Anbaugeräte der Baumaschine durch Positionierung an der linken Konsole (30) bereitstellt.

2. Der Mini-Lenkmechanismus nach Anspruch 1, **dadurch gekennzeichnet, dass** er den Stützkörper (50) in der linken Konsole (30) umfasst, der sich um seine Drehachse (51) dreht und das Mini-Lenkrad (60) oder den linken Joystick (70) (Steuerhebel) an der linken Konsole (30) positioniert, so dass der Bediener das Mini-Lenkrad (60) oder den linken Joystick (70) (Steuerhebel) abwechselnd verwenden kann oder innerhalb der linken Konsole (30) verborgen ist.

3. Der Mini-Lenkmechanismus nach Anspruch 1, **dadurch gekennzeichnet, dass** er einen Proportional-Knopf (80) umfasst, der sich an dem linken Joystick (70) (Steuerhebel) befindet, der es dem Bediener ermöglicht, die Anbaugeräte der Baumaschine zu steuern und eine Lenkaktion für das Manövrieren der Baumaschine durchzuführen.

## Revendications

1. Mini mécanisme de direction utilisé dans les sièges (10) des machines de construction qui nécessitent un contrôle de direction avec un volant, telles que les niveleuses, les chargeuses à roues en caoutchouc, les chargeuses-pelleteuses, les compacteurs et les excavatrices à roues en caoutchouc, lesdits sièges étant équipés d'une console droite (20) et d'une console gauche (30), le mini mécanisme de direction comprenant un joystick droit (40) (levier de commande) sur la console droite (20) pour contrôler les outils de la machine de construction, **caractérisé en ce que** le mini mécanisme de direction comprend
- un corps de support rotatif (50) dans la console gauche (30),
- un mini-volant (60) situé sur le corps de support (50), qui assure le processus de direction pour la manoeuvre de la machine de construction en se positionnant sur la console gauche (30) au moyen du mouvement de rotation du corps de support (50),
- un joystick gauche (70) (levier de commande) situé sur le corps de support (50), qui assure le processus de commande des outils de la machine de construction en se positionnant sur la console gauche (30) au moyen du mouvement de rotation du corps de support (50).

2. Mini mécanisme de direction selon la revendication 1, **caractérisé en ce qu'**il comprend le corps de support (50) dans ladite console gauche (30) qui tourne autour de son axe central de rotation (51) et positionne le mini-volant (60) ou le joystick gauche (70) (levier de commande) sur la console gauche (30) de manière à permettre à l'opérateur d'utiliser alternativement le mini-volant (60) ou le joystick gauche (70) (levier de commande) ou qui est caché à l'intérieur de la console gauche (30).

3. Mini mécanisme de direction selon la revendication 1, **caractérisé en ce qu'**il comprend un bouton proportionnel (80) situé sur ledit joystick gauche (70) (levier de commande) qui permet à l'opérateur de contrôler les outils de la machine de construction et d'effectuer une action de direction pour la manoeuvre de la machine de construction.
